# EUROPÄISCHE PATENTSCHRIFT

(11) **EP 3 061 039 B1**
(45) Veröffentlichungstag und Bekanntmachung des Hinweises auf die Patenterteilung: **27.11.2019**
(21) Anmeldenummer: 14747017.3
(22) Anmeldetag: 01.08.2014
(51) Int. Cl.: G06K 19/06

(54) **PRODUKTOBERFLÄCHE AUFWEISEND EINEN OPTOELEKTRONISCH LESBAREN CODE**
PRODUCT SURFACE COMPRISING AN OPTOELECTRONICALLY READABLE CODE
SURFACE DE PRODUIT COMPRENANT UN CODE LISIBLE PAR DES MOYENS OPTOÉLECTRONIQUES

(30) Priorität: 24.10.2013 DE 102013221660; 19.11.2013 DE 102013223566
(43) Veröffentlichungstag der Anmeldung: 31.08.2016
(73) Patentinhaber: Continental Reifen Deutschland GmbH, 30419 Hannover (DE)
(72) Erfinder: METZ, Markus, 31535 Neustadt/OT Bordenau (DE); NEUMANN, Christian, 31139 Hildesheim (DE); JUNGBLUTH, Benjamin, 30177 Hannover (DE)
(74) Vertreter: Finger, Karsten
(86) Internationale Anmeldenummer: PCT/EP2014/066594
(87) Internationale Veröffentlichungsnummer: WO 2015/058874

(56) Entgegenhaltungen:
- WO-A1-97/36258
- WO-A1-2005/000714
- WO-A1-2009/064580
- DE-A1- 3 333 149
- KR-A- 20060 075 863
- US-A- 4 625 101

## Beschreibung

Die Erfindung betrifft eine Produktoberfläche aufweisend einen ersten optoelektronisch lesbaren Code, welcher durch eine Anordnung flächiger Zellen einer ersten Zellenart und flächiger Zellen einer zweiten Zellenart gebildet ist.

Mittels eines optoelektronisch lesbaren Codes kann auf einfache Art und Weise Information auf einem Produkt dargestellt werden. Beispiele hierfür sind eine durch einen Strichcode dargestellte Produktnummer oder eine mittels eines QR-Codes dargestellte Internetadresse (Uniform Resource Locator), die beispielsweise auf eine Internetseite des Produktherstellers verweist. Die Zellenarten solcher Codes müssen sich hierbei in ihrem optischen Kontrast ausreichend unterscheiden, so dass die Zellen von einem optoelektronischen Lesegerät erfasst und unterschieden werden können. Üblicherweise weist ein Code zwei Zellenarten auf, die sich in ihrer Farbe, beispielsweise über ihren Farbton und/oder ihre Farbsättigung und/oder ihren Hellwert, unterscheiden. Hieraus ergibt sich ein optischer Kontrast in der Helligkeit bzw. Intensität des von den Zellen der unterschiedlichen Zellenarten reflektierten Lichts, der mittels eines optoelektonischen Lesegerätes detektiert und zur Unterscheidung der Zellenarten genutzt werden kann. Aufgrund des hohen optischen Kontrastes ist hierbei die Kombination von schwarzen und weißen Zellen eine gängige Darstellung. Üblicherweise werden solche Codes während oder nach der Herstellung des Produktes in Form einer zusätzlichen farbigen Schicht auf die Produktoberfläche aufgebracht.

Unter einem "Code" wird hierbei die Abbildungen von Daten in Symbolen verstanden. Eine "Zelle" ist ein flächiger Bereich, der durch seine optische Erscheinung und/oder seine geometrische Form und/oder zusammen mit weiteren Zellen ein solches Symbol repräsentiert. Zwei Zellen einer Zellenart weisen eine ähnliche optische Erscheinung und/oder geometrische Form auf. Zwei Zellen unterschiedlicher Zellenart unterscheiden sich signifikant in ihrer optischen Erscheinung und/oder ihrer geometrischen Form. Ein "optoelektronisch lesbarer" Code kann durch ein optoelektronisches Lesegerät erfasst und mittels entsprechender Software decodiert und interpretiert werden.

Aus der CA 2311960 C ist ein Fahrzeugluftreifen sowie ein Verfahren zu dessen Herstellung bekannt, der auf der Oberfläche der Reifenseitenwand eine Vulkanette mit einem Strichcode aus Tinte bzw. Druckerschwärze aufweist. Während der Herstellung des Fahrzeugluftreifens wird die Vulkanette auf die Oberfläche des unvulkanisierten Fahrzeugluftreifens aufgebracht und gemeinsam mit diesem vulkanisiert. WO 2005/000714 offenbart einen Fahrzeugluftreifen der einen zwei-dimensionalen lasergravierten machinenlesbaren Code aufweist. KR 2006 0075863 A offenbart einen invertierten QR Code.

Der Einsatz einer Schicht aus anderen Materialien und/oder Farben als das Material und/oder die Farbe der Produktoberfläche auf der Produktoberfläche kann sich negativ auf den Gesamteindruck des Produktes beim Betrachter auswirken. Zudem ist die Lesbarkeit eines solchen Codes z.B. durch die Beanspruchung der anderen Materialien und/oder Farben bei der Herstellung und/oder dem Gebrauch des Produktes begrenzt. Dies kann durch Dehnung oder Wärmeeinwirkung bei der Herstellung oder durch Verfärbung durch Sonneneinstrahlung oder durch Ablösung der Schicht bei mechanischer Belastung beim Gebrauch des Produktes erfolgen. Gerade bei großen Herstellungszahlen ist es zudem aufwändig und teuer, jedes einzelne Produkt mit einer zusätzlichen Schicht zu versehen. Daher ist man bestrebt, den Code kostengünstiger und auf einfache Art und Weise auf der Produktoberfläche anbringen zu können.

Es ist Aufgabe der Erfindung, eine Produktoberfläche zur Verfügung zu stellen, die einen Code aufweist, der optoelektronisch lesbar ist, einen großen detektierbaren Bereich aufweist und dessen Lesbarkeit robust gegenüber Beanspruchung bei der Herstellung und/oder dem Gebrauch der Produktoberfläche ist und der kostengünstig herzustellen ist.

Die Aufgabe wird mittels des Gegenstands nach Anspruch 1 sowie Anspruch 2 gelöst.

Bedeutend ist, dass sich die zwei Zellenarten von jedem der beiden Codes aufgrund der unterschiedlichen Reflexionseigenschaften der Oberflächenprofile der beiden Zellenarten bei Lichteinfall in der Intensität des von den Oberflächenprofilen der beiden Zellenarten reflektierten Lichtes voneinander unterscheiden. Hierdurch ergibt sich für jeden der beiden Code ein Intensitätsunterschied ΔI_{c}, mit c=1 für den ersten Code und c=2 für den zweiten Code, ergibt. Für die Ermittlung des

Intensitätsunterschieds werden Zellen der unterschiedlichen Zellenarten mit gleicher geometrischer Abmessung zugrunde gelegt. Der Intensitätsunterschied ΔI_{c} kann von einem optoelektronischen Lesegerät erfasst werden. Somit können die Zellen unterschiedlicher Zellenarten unterschieden werden und der Code ist mittels eines optoelektronischen Lesegerätes lesbar.

Der Intensitätsunterschied ΔI_{c} wird somit nicht durch die unterschiedliche farbige Gestaltung und/oder durch unterschiedliche Materialien der Zellenoberflächen unterschiedlicher Zellenarten, sondern durch die unterschiedliche Gestaltung der Oberflächenprofile der Zellenarten erzeugt. Hierbei weist das Oberflächenprofil zumindest einer Zellenart eines jeden Codes zumindest eine Erhebung und/oder Vertiefung relativ zur Produktoberfläche auf.

Der Intensitätsunterschied ΔI_{c} eines Codes ist unter anderem abhängig von der Richtung des einfallenden Lichts sowie von der Reflexionsrichtung, d.h. der Richtung des reflektierten Lichts. Für jede Beleuchtungssituation gibt es eine Reflexionsrichtung, in der der Unterschied der von den Oberflächenprofilen der beiden Zellenarten des Codes reflektierten Intensitäten maximal ist, d.h. es gibt eine Reflexionsrichtung, in der der absolute Intensitätsunterschied |ΔI_{c}| des Codes maximal ist. Ein Detektor eines optoelektronischen Lesegerätes, der das in diese Reflexionsrichtung reflektierte Licht auffängt, erzielt ein für diese Beleuchtungssituation optimales Detektionsergebnis. Hierdurch wird ein optimales optoelektronisches Lesen des Codes ermöglicht.

Um den Bereich optimaler bzw. guter Detektierbarkeit zu erweitern, weist die Produktoberfläche zwei solcherart ausgebildete Codes auf. Sie unterscheiden sich darin, dass das Maximum des absoluten Intensitätsunterschieds |ΔI₁| des ersten Codes in einer anderen Reflexionsrichtung liegt als das Maximum des absoluten Intensitätsunterschieds |ΔI₂| des zweiten Codes. Hierdurch kann auch der detektierbare Bereich erweitert werden. Der detektierbare Bereich umfasst die Reflexionsrichtungen, in denen entweder der erste Code und/oder der zweite Code durch ein optoelektronisches Lesegerät erfasst und gelesen werden kann.

Das "Oberflächenprofil" einer Zellenart bzw. das "Oberflächenprofil" der Zellen einer Zellenart charakterisiert die Erhebung(en) und/oder Vertiefung(en) der Oberfläche der Zellen der Zellenart. Das Oberflächenprofil umfasst die Dichte und/oder Höhe der Erhebungen und/oder Vertiefungen der Oberfläche und/oder die Orientierung der Oberfläche bzw. von Teilbereichen der Oberfläche.

Die "Reflexionseigenschaften" charakterisieren, wie Licht, das auf eine Oberfläche trifft, von dieser zurückgeworfen, d.h. reflektiert, wird. Die Reflexionseigenschaften werden vom Oberflächenprofil der Oberfläche und vom Oberflächenmaterial beeinflusst. Die Reflexionseigenschaften werden durch der fachkundigen Person bekannte Effekte wie Absorption und/oder Reflexion und/oder Verschattung beeinflusst. Die Reflexion erfolgt diffus und/oder gerichtet. Die Intensität des reflektierten Lichtes ist richtungsabhängig.

Oberflächenprofile, die sich in ihren Reflexionseigenschaften unterscheiden, unterscheiden sich in charakteristischen Merkmalen des von ihnen reflektierten Lichtes. Das von den Zellen einer Zellenart reflektierte Licht ist somit nicht zwingend in allen Merkmalen identisch sondern weist gleiche charakteristische Merkmale, d.h. die gleichen Reflexionseigenschaften auf, welche sich von den Reflexionseigenschaften der Zellen der anderen Zellenart unterscheiden. Dementsprechend werden die Erhebungen und/oder Vertiefungen unterschiedlicher Zellen einer Zellenart durch das Oberflächenprofil charakterisiert, sind aber nicht zwingend identisch.

Besonders geeignet zur Erzeugung eines Intensitätsunterschiedes eines Codes ist die Kombination von zwei Zellenarten mit Oberflächenprofilen, die eine unterschiedlich starke Absorption aufweisen und/oder mit Oberflächenprofilen, bei denen ein Oberflächenprofil bevorzugt gerichtet reflektiert und das andere Oberflächenprofil bevorzugt diffus reflektiert und/oder mit Oberflächenprofilen, bei denen ein Oberflächenprofil bevorzugt gerichtet in eine Richtung reflektiert und das andere Oberflächenprofil bevorzugt gerichtet in eine hierzu verschiedene Richtung reflektiert.

Wie die fachkundige Person weiß, ist das von einer Oberfläche reflektierte Licht auch abhängig von Richtung, Intensität und Wellenlänge des eingestrahlten Lichtes. Im Zuge der Erfindung wird von einer ausreichenden Lichtquelle ausgegangen. Hierbei handelt es sich beispielsweise um eine in das optische Lesegerät integrierte aktive Lichtquelle oder um Umgebungslicht wie Sonnenlicht oder eine Raumbeleuchtung.

Das "optoelektronische Lesegerät" umfasst zumindest einen Detektor für Licht. Als optoelektronisches Lesegerät kann ein Lesegerät dienen, welches, wie beispielsweise ein Strichcodescanner, aktiv Licht aussendet und das in den Detektor zurückreflektierte Licht detektiert. Es kann sich auch um ein optoelektronisches Lesegerät handeln, das, wie beispielsweise ein mit einer Fotooptik und einer geeigneten Software ausgestattetes Smartphone, Licht detektiert, das aus der Umgebung von der Oberfläche des Codes in den Detektor reflektiert wird. Das optoelektronische Lesegerät erfasst mit einer Ortsauflösung von mindestens der minimalen Zellenabmessung die Intensität des von den einzelnen Zellen reflektierten Lichtes und ist sensitiv für den Intensitätsunterschied ΔI_{c} des von den Zellen unterschiedlicher Zellenarten eines Codes reflektierten Lichtes. Die Zellen werden somit erfasst und unterschieden, wodurch der Code optoelektronisch gelesen werden kann. Eine externe oder eine in das optoelektronische Lesegerät integrierte Interpretationssoftware decodiert und interpretiert die mittels des Codes dargestellte Information. Detektionsmechanismus und Interpretationssoftware können auf die Anforderungen des in die Produktoberfläche integrierten Codes abgestimmt sein.

Unter "Licht" ist elektromagnetische Strahlung zu verstehen, die sich zur Detektion durch ein optoelektronisches Lesegerät eignet. Insbesondere ist hierbei elektromagnetische Strahlung mit einer Wellenlänge von 380 nm bis 780 nm zu verstehen.

Die Zellen der Codes sind integraler Bestandteil der Produktoberfläche, d.h. sie sind als dreidimensionales Profil aus dem Material der Produktoberfläche bzw. des Produktes selbst gebildet. Das Material der Produktoberfläche ist auf die Beanspruchung bei der Herstellung und/oder der Benutzung des Produktes abgestimmt. Beispielsweise ist das elastomere Material der Oberfläche eines Fahrzeugluftreifens auf die starke Belastung durch hohe Temperaturen bei der Vulkanisation ausgerichtet. Somit ist keine generelle Einbuße der Lesbarkeit der Codes durch Beanspruchung bei der Herstellung und/oder dem Gebrauch der Produktoberfläche zu erwarten. Die Lesbarkeit der Codes ist robust gegenüber diesen Beanspruchungen und es sind keine zusätzlichen aufwändigen und kostenintensiven Maßnahmen zum Schutz der Lesbarkeit der Codes nötig.

Zudem entfällt das aufwändige und kostenintensive Aufbringen von einer oder mehreren zusätzlichen Schicht(en) aus Farbe und/oder anderen Materialien auf die Produktoberfläche und der Gesamteindruck der Produktoberfläche beim Betrachter wird nicht durch Farbe und/oder andere Materialien auf der Produktoberfläche beeinflusst.

Somit ist eine kostengünstige Produktoberfläche zur Verfügung gestellt, die einen optoelektronisch lesbaren Code aufweist, der einen großen detektierbaren Bereich aufweist und dessen Lesbarkeit robust gegenüber Beanspruchung bei der Herstellung und/oder dem Gebrauch der Produktoberfläche ist.

Je nach Reflexionseigenschaften der Oberflächenprofile der Zellenarten eines Codes kann für bestimmte Kombinationen aus Einfallsrichtung und Reflexionsrichtung des Lichtes ΔI_{c} > 0 gelten (d.h. die von einer Zelle der zweiten Zellenart reflektierte Intensität ist größer als die von einer Zelle der ersten Zellenart reflektierte Intensität), wohingegen für andere Kombination aus Einfallsrichtung und Reflexionsrichtung ΔI_{c} < 0 gilt.

Handelsübliche optoelektronische Lesegeräte erkennen ein detektiertes Intensitätsmuster oftmals nur dann als Code, wenn eine spezifische Anordnung von Zellen einer Zellenart (im Folgenden: der zweiten Zellenart) des Codes mit einer höheren Intensität detektiert werden als eine spezifische Anordnung von Zellen der anderen Zellenart (im Folgenden: der ersten Zellenart) des Codes. Ein solcher Code kann somit vom optoelektrischen Lesegerät nur für die Kombinationen aus Einfallsrichtung und Reflexionsrichtung erkannt und gelesen werden, für die der Intensitätsunterschied ΔI_{c} des Codes positiv, also ΔI_{c} > 0, ist.

Um beim Einsatz solcher optoelektronischen Lesegeräte den Bereich optimaler Detektierbarkeit zu verbessern ist es vorteilhaft, wenn die Oberflächenprofile der beiden Zellenarten des ersten Codes und die Oberflächenprofile der beiden Zellenarten des zweiten Codes so ausgebildet sind, dass das Maximum des positiven Intensitätsunterschieds ΔI₁ > 0 des ersten Codes in einer anderen Reflexionsrichtung liegt als das Maximum des positiven Intensitätsunterschieds ΔI₂ > 0 des zweiten Codes. Hierdurch kann auch eine Erweiterung des detektierbaren Bereichs erwirkt werden.

Eine Erweiterung des detektierbaren Bereichs wird erreicht, indem die Oberflächenprofile der Zellenarten des ersten Codes und des zweiten Codes so ausgebildet sind, dass mindestens 50% der möglichen Reflexionswinkel, besonders bevorzugt mindestens 80% der möglichen Reflexionswinkel, in denen für den Intensitätsunterschied ΔI₁ des ersten Codes ΔI₁ ≤ 0 gilt, der Intensitätsunterschied ΔI₂ des zweiten Codes die Bedingung ΔI₂ > 0 erfüllt.

Für eine Reflexionsrichtung, für die der Intensitätsunterschied |ΔI_{c}| eines Codes unterhalb der Detektorgenauigkeit liegt, wird der Intensitätsunterschied des Codes dabei als 0 gewertet, also ΔI_{c} = 0.

Gemäss einem Beispiel, das das Verständnis der Erfindung erleichtert, ist es vorteilhaft, wenn beide Codes eindimensionale Codes, insbesondere Strichcodes, oder zweidimensionale Codes, sind. Es eignet sich prinzipiell jede Codeart, die sich durch Zellen zweier Zellenarten in einer Fläche darstellen lässt. In einer bevorzugten Ausführungsform ist eine Zelle durch einen Kreis, eine Kreisscheibe, einen Strich, ein Rechteck oder ein Quadrat dargestellt. Bei den zweidimensionalen nicht erfindungsgemässen Codes sind insbesondere gestapelte Codes wie der Codablock, Code 49 und PDF417, sowie Matrix Codes wie der DataMatrix Code, MaxiCode und Aztec-Code, sowie Punktcodes zu nennen. QR-Codes gemäss der Erfindung umfassen auch Weiterentwicklungen wie den Design-QR-Code, Micro-QR-Code, Secure-QR-Code und iQR-Code.

Gemäss der Erfindung, stellen die zwei Codes zumindest zum Teil die gleiche Information dar. Hierdurch ist sichergestellt, dass diese Information vom optoelektronischen Lesegerät erfasst wird, wenn zumindest einer der Codes vom optoelektronischen Lesegerät als solcher erkannt und gelesen wird.

Die zwei Codes können, gemäss einem Beispiel, das das Verständis der Erfindung erleichtert, auch unterschiedliche Information beinhalten. Sie können sich weiter in ihrer Codierung und/oder in ihrer Fehlertoleranz unterscheiden.

Erfindungsgemäss sind die zwei Codes auf der Produktoberfläche benachbart angeordnet. Hierdurch können beide Codes auf einfache Art und Weise gleichzeitig oder nacheinander innerhalb des Detektionsbereichs des optoelektronischen Lesegeräts positioniert werden. Hierdurch ist ein einfaches und zuverlässiges Erfassen und Lesen zumindest eines Codes durch das optoelektronische Lesegerät erleichtert. Durch die gezielte Anordnung der Codes kann zudem der Gesamteindruck der durch die Codes eingenommenen Produktoberfläche beim Betrachter beeinflusst werden.

Entsprechende Vorteile ergeben sich auch, wenn der zweite Code auf der Produktoberfläche eine geringere Fläche einnimmt als der erste Code und wenn der zweite Code in die Fläche des ersten Codes integriert ist. Hierbei handelt es sich erfindungsgemäss beim ersten Code um einen Design-QR-Code, der innerhalb der Fläche des Codes den zweiten Code, auch einen QR-Code, aufweist.

Eine erfindungsgemässe Ausgestaltung der Codes ist dadurch gegeben, dass die Zellenarten A, welche die erste Zellenart des ersten Codes und die zweite Zellenart des zweiten Codes umfassen, das gleiche Oberflächenprofil aufweisen und dass die Zellenarten B, welche die zweite Zellenart des ersten Codes und die erste Zellenart des zweiten Codes umfassen, das gleiche Oberflächenprofil aufweisen. Die Oberflächenprofile der Zellenarten der beiden Codes sind somit vertauscht und es gilt ΔI₁ = - ΔI₂ (wobei jeweils von Reflexionsflächen gleicher Oberflächenabmessung ausgegangen wird). Für ΔI_{c} ≠ 0 ist damit gewähreistet, dass für jeden Reflexionswinkel bzw. jeden Einfallswinkel für genau einen Code ΔI_{c} > 0 gilt. Die Detektierbarkeit ist somit durch ein optoelektronisches Lesegerät, das einen Code nur bei positivem Intensitätsunterschied als solchen erkennt, nicht eingeschränkt.

In einem vorteilhaften Ausführungsbeispiel ist das Oberflächenprofil der Zellenarten A relativ zum Oberflächenprofil der Zellenarten B um 90° in der Ebene der Produktoberfläche gedreht. Weist das Oberflächenprofil der Zellenarten A eine bevorzugte Reflexionsrichtung auf, so ergibt sich hierdurch für das Oberflächenprofil der Zellenarten B eine um 90° gedrehte bevorzugte Reflexionsrichtung. Hierdurch ist der Intensitätsunterschied der Zellenarten der Codes zuverlässig sichergestellt und diese sind optoelektronisch lesbar.

Es ist vorteilhaft, wenn das Oberflächenprofil einer Zellenart Elemente aufweist, die eine Struktur und/oder eine Textur bilden. Die Höhe der Elemente kann regelmäßig oder unregelmäßig sein. Der Begriff "Struktur" umfasst die regelmäßige Anordnung von Elementen wie eine regelmäßige Schraffur, d.h. gerade und parallel zueinander angeordnete Stege, wie regelmäßige Raster aus Elementen oder wie Gitterstrukturen aus sich kreuzenden Stegen. Der Begriff "Textur" umfasst eine unregelmäßige aber weitgehend homogen erscheinende Verteilung von Elementen, insbesondere eine Verteilung von Höhe und/oder Anordnung der Elemente gemäß einer statistischen Verteilung oder eines Rauschens. Ein solches Oberflächenprofil ermöglicht eine gezielte Beeinflussung der charakteristischen Reflexionseigenschaften. Durch die gezielte Auswahl, Anordnung und Abmessung der Elemente der Struktur und/oder der Textur kann eine vorrangig gerichtete oder vorrangig diffuse Reflexion erreicht werden. Durch mehrmaliges Reflektieren des Lichtes an mehreren Elementen wird der Absorptionsgrad erhöht. Durch die gezielte Kombination von zwei Zellenarten eines Codes mit Oberflächenprofilen aufweisend eine unterschiedliche Struktur und/oder Textur kann der Unterschied in der reflektierten Intensität der Zellenarten gezielt erhöht und somit die optoelektronische Lesbarkeit des Codes optimiert werden. Ein entsprechender Effekt wird erzielt, wenn Zellenarten kombiniert werden, bei denen eine Zellenart ein Oberflächenprofil mit einer Struktur und/oder Textur aufweist und eine andere Zellenart ein Oberflächenprofil ohne eine Struktur oder Textur aufweist.

Bevorzugt weist das Oberflächenprofil zumindest einer Zellenart jedes Codes eine Struktur und/oder Textur auf. Bevorzugt weisen zumindest die Oberflächenprofile der Zellenarten A eine Struktur und/oder eine Textur auf.

Zweckmäßig zur gezielten Beeinflussung der Reflexionseigenschaften erweisen sich Elemente, deren Form ein Stege und/oder ein Zylinder und/oder eine Pyramide und/oder ein Kegel und/oder ein Pyramidenstumpf und/oder ein Kegelstumpf zugrunde liegt. Zweckmäßig ist es auch, wenn die Oberfläche der Elemente Erhebungen und/oder Vertiefungen, insbesondere eine Treppenstruktur, aufweist. Eine solche Struktur erhöht den Grad der Absorption und/oder der Diffusion.

Es ist zweckmäßig, wenn die Elementspitzen zweier benachbarter Elemente einen Abstand von 0,01 mm bis 0,8 mm aufweisen und/oder wenn Elemente eines Oberflächenprofils einer Zellenart eine Höhendifferenz von 0,08 mm bis 0,5 mm aufweisen. Die Höhendifferenz eines Elementes bemisst sich als Differenz der Höhe zwischen Elementgrund und Elementspitze. Solche Abmessungen eignet sich hervorragend zur Manipulation der Reflexionseigenschaften von Licht, ohne dass das einzelne Element für einen Betrachter auf der Produktoberfläche heraussticht. Zweckmäßig ist es auch, wenn das Oberflächenprofil einer Zellenart Bereiche mit einer Rautiefe von maximal 0,01 mm, bevorzugt mit einer Rautiefe von maximal 0,008 mm, aufweist. Ein solcher Bereich weist für Licht eine hohe Reflexionsrate und/oder charakteristische Reflexionseigenschaften auf. Zudem entspricht eine solche Rautiefe der üblichen produktionsbedingten Rautiefe vieler Produktoberflächen. Bevorzugt weisen die Oberflächenprofile der Zellenarten B eine solche Rautiefe auf.

Die "Rautiefe" ist dabei gemäß DIN EN ISO 4287:1998 der arithmetischer Mittelwert der Einzelrautiefen aufeinanderfolgenden Einzelmessstrecken. Die Einzelrautiefe ist dabei die maximale Höhendifferenz innerhalb einer Einzelmessstrecke. Setzt sich das Oberflächenprofil weitgehend aus Elementen zusammen, so ist die Rautiefe das Maximum aus Rautiefe gemäß DIN EN ISO 4287:1998 und mittlerer Höhendifferenz der Elemente.

Vorteilhaft ist es, wenn sich die Oberflächenprofile der Zellenarten eines Codes in ihrer Rautiefe unterscheiden, insbesondere wenn das Verhältnis der Rautiefe des Oberflächenprofils einer Zellenart zur Rautiefe des Oberflächenprofils der anderen Zellenart mindestens 15, insbesondere mindestens 30, beträgt. Die Reflexionseigenschaften solcher Oberflächenprofile unterscheiden sich ausreichend, um einen durch ein optoelektronisches Lesegerät lesbaren Code zur Verfügung zu stellen. Bevorzugt erfüllen beide Codes diese Bedingung, wobei die Oberflächenprofile der Zellenarten A eine größere Rautiefe aufweisen als die Oberflächenprofile der Zellenarten B. Insbesondere können die Oberflächenprofile der Zellenarten B eine Struktur und/oder Textur aufweisen.

Es ist zweckmäßig, wenn Zellen ein zusätzliches Höhenprofil aufweisen. Hierbei kann es sich um eine Neigung und/oder Krümmung der Zellenoberfläche und/oder um eine Absenkung oder Erhöhung der Zellenoberfläche relativ zur Produktoberfläche handeln, wodurch die Reflexionseigenschaften beeinflusst werden. Eine Absenkung von Zellenoberflächen dient dem Schutz vor mechanischer Beanspruchung, wie Zerkratzen. Eine Absenkung bzw. Erhöhung von Zellenoberflächen kann durch die damit einhergehende Verschattung auch die Lesbarkeit des Codes erhöhen.

Es ist zweckmäßig, wenn jeder Code eine Grundfläche von 1 cm² bis 16 cm² auf der Produktoberfläche einnimmt. Die Erfindung eignet sich aber auch für Codes mit einer größeren oder kleineren Grundfläche.

Polymeres Material, insbesondere elastomeres Material, eignet sich hervorragend für eine erfindungsgemäße Produktoberfläche.

Vorteilhaft ist die Verwendung der Produktoberfläche auf der Seitenwand eines Fahrzeugluftreifens. Die Seitenwand ist bei der Herstellung und beim Gebrauch großer Beanspruchung ausgesetzt. Bei der Herstellung wird das elastomere Material im Vulkanisationsprozess einer hohen Temperatur ausgesetzt. Im Gebrauch ist beispielsweise ein Fahrzeugluftreifen starken Witterungsschwankungen ausgesetzt. Das elastomere Material ist auf diese Beanspruchungen hin abgestimmt. Die Lesbarkeit von Codes, der als integraler Bestandteil der Produktoberfläche aus diesem elastomeren Material selbst besteht, ist robust gegenüber diesen Beanspruchungen.

Die Verwendung der Produktoberfläche, insbesondere für die Seitenwand eines Fahrzeugluftreifens, ermöglicht es, gesetzliche Produktinformationen und/oder optionale Information, insbesondere eine Internetadresse, mittels der in die Produktoberfläche integrierten Codes darzustellen. Hierdurch ist eine kompakte Darstellung dieser Information geschaffen, die mittels eines optoelektronischen Lesegerätes gelesen werden kann. Die Internetadresse kann auf eine Internetseite verweisen, die weiterführende Information enthält, insbesondere Information über das Produkt und/oder den Hersteller und/oder eine Montage- und/oder Gebrauchsanleitung.

Ähnliche Vorteile ergeben sich bei der Verwendung der Produktoberfläche auf einem Förderband, z.B. an einer Stelle, die nicht permanent mit Schüttgut beaufschlagt ist.

Weitere Merkmale, Vorteile und Einzelheiten der Erfindung werden nun anhand der Figuren, die schematische Ausführungsbeispiele darstellen, näher beschrieben. Dabei zeigt die:
Fig. 1 die Reflexion von Licht an einer Produktoberfläche;
Fig. 2 und 3 jeweils eine Draufsicht auf eine Produktoberfläche aufweisend zwei QR-Codes,
Fig. 4 eine Draufsicht auf eine Zelle,
Fig. 5 einen Querschnitt durch zwei benachbarte Zellen unterschiedlicher Zellenart,
Fig. 6 einen Ausschnitt der Oberfläche eines Elementes und
Fig. 7 bis 10 jeweils eine Graustufendarstellung des Oberflächenprofils einer Zelle in der Draufsicht.

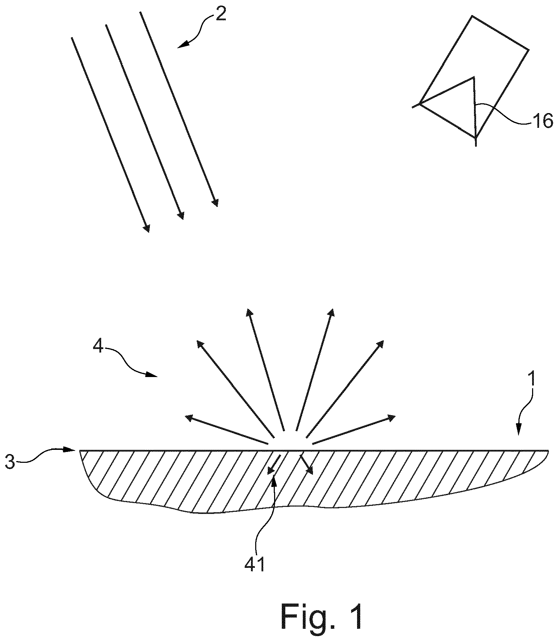

Die Figur 1 veranschaulicht die Reflexion von Licht an einer Produktoberfläche 1, welche im Querschnitt gezeigt ist. Einfallendes Licht 2 trifft auf die Produktoberfläche 1. Gemäß der Reflexionseigenschaften des nicht weiter dargestellten Oberflächenprofils 3 der Produktoberfläche 1 wird ein Teil des Lichtes 41 von der Produktoberfläche 1 absorbiert, ein anderer Teil des Lichtes 4 wird zurückgeworfen, d.h. reflektiert. Die Intensität des reflektierten Lichtes 4 ist richtungsabhängig und wird vom Oberflächenprofil 3 beeinflusst. Die Richtung und Intensität des einfallenden Lichtes 2, des absorbierten Lichtes 41 sowie des reflektierten Lichtes 4 ist durch die Richtung und Länge der Pfeile veranschaulicht. Ein Teil des reflektierten Lichtes 4 gelangt in einen Detektor 16 eines optoelektronischen Lesegerätes, welcher die Intensität des Lichtes ortsaufgelöst detektiert.

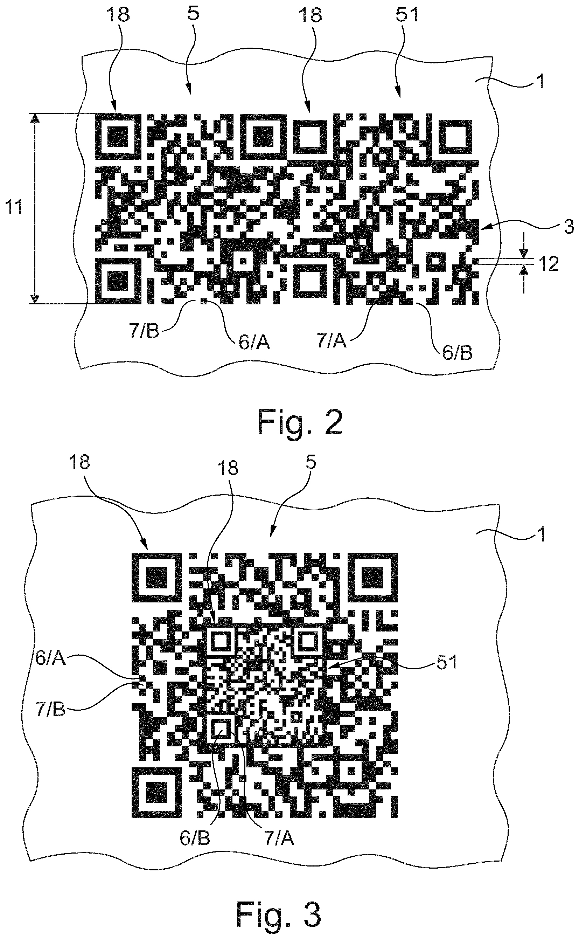

Die Figuren 2 und 3 zeigen jeweils eine Draufsicht auf eine Produktoberfläche 1 aufweisend zwei QR-Codes 5, 51. Die Produktoberfläche 1 ist die Oberfläche einer Seitenwand eines Fahrzeugluftreifens. Die dargestellten Codes 5, 51 weisen Zellen 6 einer ersten Zellenart des jeweiligen Codes 5, 51 und Zellen 7 einer zweiten Zellenart des jeweiligen Codes 5, 51 auf. Die Zellen 6, 7 sind jeweils integraler Bestandteil der Produktoberfläche 1. Die Zellen der Zellenarten A, d.h. die Zellen 6 des ersten Codes 5 und die Zellen 7 des zweiten Codes 51 weisen das gleiche Oberflächenprofil 3 mit Vertiefungen relativ zur Produktoberfläche 1 auf. Die Zellen der Zellenarten B, d.h. die Zellen 7 des ersten Codes 5 und die Zellen 6 des zweiten Codes 51 weisen das gleiche Oberflächenprofil 3 auf. Das Oberflächenprofil 3 der Zellenarten A unterscheidet sich in seinen Reflexionseigenschaften vom Oberflächenprofil 3 der Zellenarten B, wodurch sich für jeden Code 5, 51 ein Intensitätsunterschied ΔI_{c} ergibt und der Code optoelektronisch lesbar ist. Die Oberflächenprofile 3 der Zellenarten der beiden Codes 5, 51 sind vertauscht und es erfolgt eine Inversion der Intensitätsunterschiede, d.h. ΔI₁ = - ΔI₂ (wobei jeweils von Reflexionsflächen gleicher Oberflächenabmessung ausgegangen wird). Das Maximum des positiven Intensitätsunterschieds ΔI₁ > 0 des ersten Codes 5 liegt somit in einer anderen Reflexionsrichtung als das Maximum des positiven Intensitätsunterschieds ΔI₂ > 0 des zweiten Codes 51. Weiter gilt für alle möglichen Reflexionswinkel in denen für den Intensitätsunterschied ΔI₁ des ersten Codes 5 ΔI₁ < 0 gilt, dass der Intensitätsunterschied ΔI₂ des zweiten Codes 51 die Bedingung ΔI₂ > 0 erfüllt.

Die in den Figuren 2 und 3 dargestellten Codes 5, 51 weisen jeweils spezifische Anordnungen 18 von Zellen 6 der ersten Zellenart und Zellen 7 der zweiten Zellenart auf, die zum Erfassen des Codes durch ein optoelektronisches Lesegerät von Bedeutung sind. Eine spezifische Anordnung 18 umfasst beispielsweise ein Quadrat aus neun Zellen 6, welche von Zellen 7 umrandet sind, welche wieder von Zellen 6 umrandet sind. Gilt für die spezifischen Anordnungen 18 eines QR-Codes ΔI_{c} > 0, so wird der Code üblicherweise von einem optoelektronischen Lesegerät als QR-Code erkannt.

Die in Figur 2 dargestellten zwei Codes 5, 51 sind QR Codes mit gleicher Codierung und Fehlertoleranz und sind auf der Produktoberfläche 1 unmittelbar benachbart angeordnet. Die Codes 5, 51 sind quadratisch mit einer Kantenlänge 11 von 2 cm und nehmen somit jeweils eine Fläche von 4 cm² auf der Produktoberfläche 1 ein. Die Zellen 6, 7 sind quadratisch mit einer Kantenlänge 12 von ca. 0,69 mm.

Die in Figur 3 dargestellten Codes 5, 51 sind QR-Codes. Der zweite Code 51 nimmt eine geringere Fläche ein als der erste Code 5 und ist in die Fläche des ersten Codes 5 integriert. Der erste Code 5 ist ein Design-QR-Code, der eine größere Fehlertoleranz aufweist als der zweite Code 51, welcher ein QR Code ist und zumindest zum Teil gleiche Information wie der erste Code 5 darstellt.

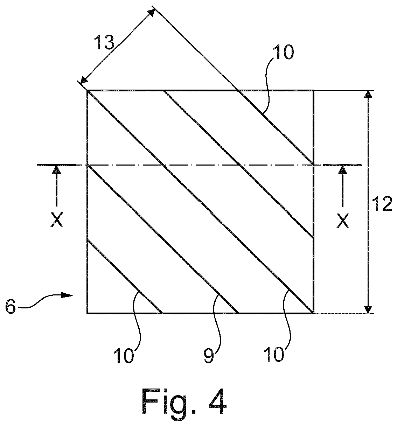

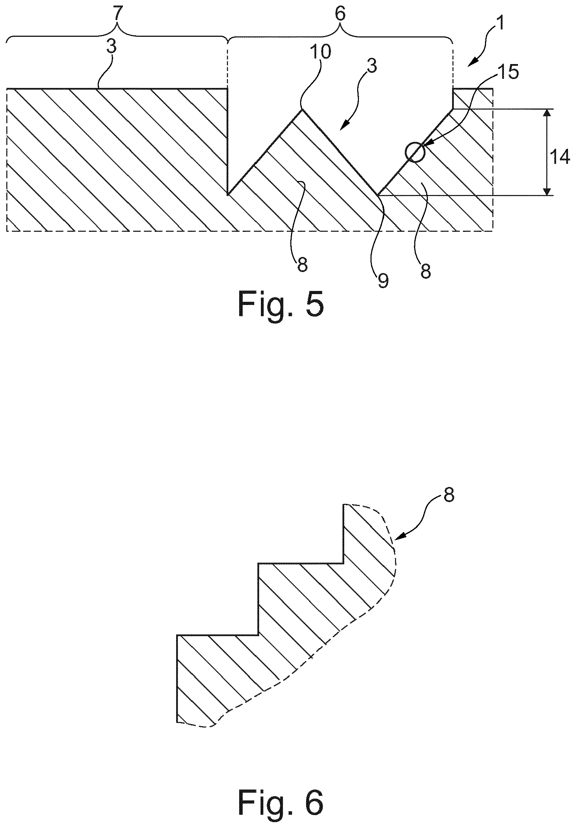

Die Figur 4 zeigt eine Draufsicht auf eine Zelle 6 mit einem Oberflächenprofil 3 aufweisend Vertiefungen relativ zur Produktoberfläche 1. In Zusammenschau mit der Fig. 5 erkennt man, dass das Oberflächenprofil 3 der Zelle 6 Elemente 8 aufweist, welche eine Struktur bilden. Die Struktur ist eine Schraffur mit regelmäßig angeordneten Stegen mit dreieckigem Querschnitt als Elemente 8. Der Abstand 13 der Elementgründe 9 bzw. der Elementspitzen 10 beträgt 0,24 mm.

Die Figur 5 zeigt einen Querschnitt entlang der Linie X-X durch die in Figur 4 dargestellte Zelle 6 sowie durch eine daran angrenzende Zelle 7, wobei sich die beiden Zellen in ihrem Oberflächenprofil 3 unterscheiden. Bei der Zelle 6 handelt es sich dabei beispielsweise um eine Zelle 6 der ersten Zellenart und bei der Zelle 7 um eine daran angrenzende Zelle 7 der zweiten Zellenart des jeweils ersten der in Fig. 2 oder Fig. 3 gezeigten Codes 5. Das Oberflächenprofil 3 der Zelle 6 weist mit einer Höhendifferenz 14 von 0,2 mm zwischen den Elementgründen 9 und den Elementspitzen 10 eine Rautiefe von 0,2 mm auf. Die Oberfläche der Zelle 6 ist durch ein zusätzliches Höhenprofil relativ zur Produktoberfläche 1 so abgesenkt, dass die Elementspitzen 10 das Niveau der Produktoberfläche 1 um 0,05 mm unterschreiten. Das Oberflächenprofil 3 der Zelle 7 der zweiten Zellenart weist eine Rautiefe von 0,008 mm gemäß DIN EN ISO 4287:1998 auf. Die Rautiefe des Oberflächenprofils 3 der Zelle 6 der ersten Zellenart ist somit um einen Faktor 25 größer als die Rautiefe des Oberflächenprofils 3 der Zelle 7 der zweiten Zellenart.

Ein Ausschnitt 15 des Elementes 8 aus der Figur 5 ist in der Figur 6 zu sehen. Die Oberfläche des Elementes 8 weist eine Treppenstruktur mit einer Stufenhöhe von 0,02 mm auf.

Die Reflexionseigenschaften des in den Figuren 4 bis 6 dargestellten Oberflächenprofils 3 der Zelle 6 unterscheiden sich deutlich von den Reflexionseigenschaften des in Figur 5 dargestellten Oberflächenprofils der Zelle 7. Das von den Zellen 6,7 reflektierte Licht kann mit einem optoelektronischen Lesegerät detektiert und unterschieden werden. Ein Code, der zwei solche Zellenarten aufweist, ist somit durch ein optoelektronisches Lesegerät lesbar.

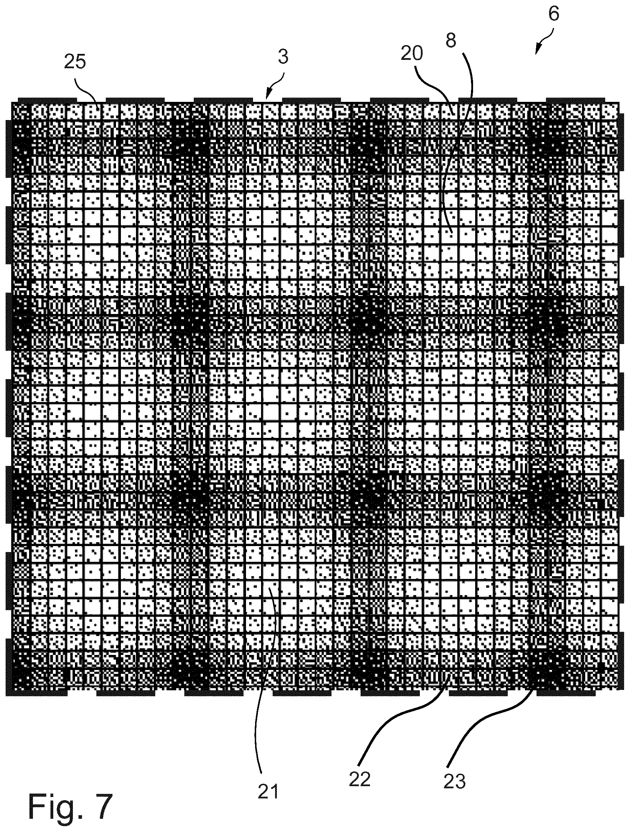

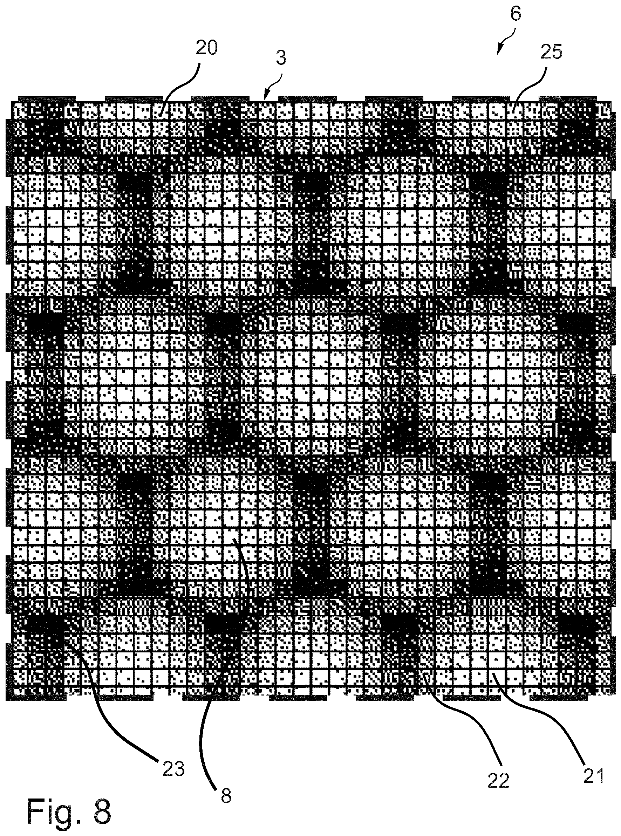

Die Figuren 7 bis 10 zeigen jeweils eine Draufsicht auf weitere Ausführungsbeispiele einer Zelle 6 einer Zellenart. Das Oberflächenprofil 3 jeder Zelle 6 ist dabei als Graustufenbild dargestellt. Ein Code, der eine Zellenart mit einem der in den Figuren 7 bis 10 dargestellten Oberflächenprofilen 3 sowie eine Zellenart mit dem in Figur 5 gezeigten Oberflächenprofil 3 der Zelle 7 aufweist, kann durch ein optoelektronisches Lesegerät gelesen werden. Ein Vergleich dieser Kombinationen hat gezeigt, dass ein Code, dessen erste Zellenart das in Figur 8 gezeigte Oberflächenprofil 3 und dessen zweite Zellenart das Oberflächenprofil der in Figur 5 gezeigten Zelle 7 aufweist, zum besten Detektionsergebnis führt.

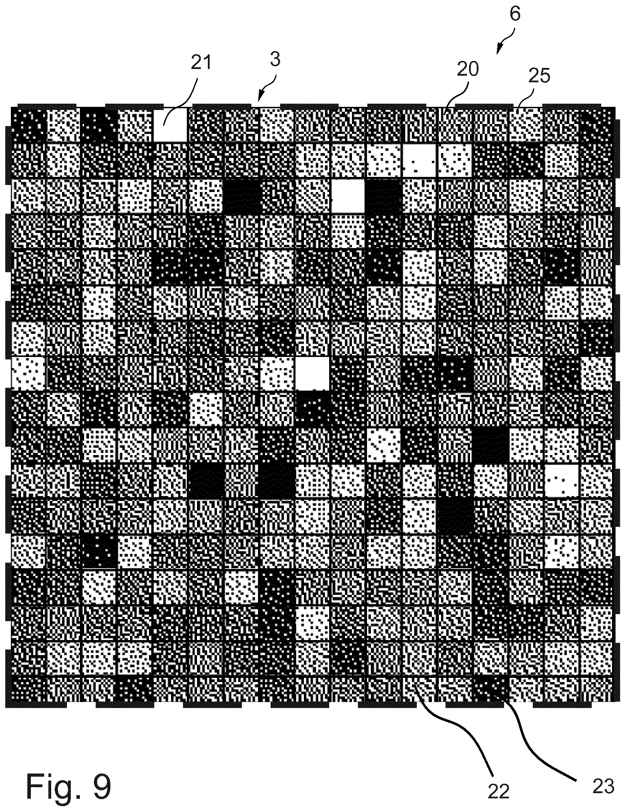

Die Höhe der Erhebungen und/oder Vertiefungen des Oberflächenprofils 3 sind im Graustufenbild durch 256 Graustufen dargestellt. Schwarz stellt den tiefsten Punkt, weiß den höchsten Punkt des Oberflächenprofils 3 dar. Der Höhenunterschied beträgt dabei 0,2 mm. Durch die diskrete Höhenabstufung gemäß der diskreten Graustufenwerte weisen die Elemente 8 der Oberflächenprofile 3 eine Treppenstruktur auf. Ein solches Oberflächenprofil 3 bzw. das hierzu komplementär ausgebildete Oberflächenprofil eines Formwerkzeuges zur Herstellung eines solchen Oberflächenprofiles 3 auf einer Produktoberfläche 1 kann beispielsweise durch Lasergravur erzeugt werden. In Figur 7, 8 und 10 beträgt die Kantenlänge eines jeden Pixels 20 0,02 mm, in Figur 9 beträgt die Kantenlänge eines jeden Pixels 20 0,04 mm.

Jedes Pixel 20 hat somit eine konstante Höhe, welche durch die Graustufe repräsentiert ist. Die Graustufe eines jeden Pixels 20 ist dabei durch die kumulierte Fläche der schwarzen Felder 25 innerhalb des Pixels 20 dargestellt. Die Felder 25 sind insbesondere Rechtecke. Beispielsweise ist deutlich erkennbar, dass jeweils das Pixel 21 eine deutlich geringere kumulierte Fläche der Felder 25 aufweist als das Pixel 22. Dem Pixel 21 ist somit eine geringere (hellere) Graustufe zuzuweisen als dem Pixel 22. Das Pixel 21 weist im Oberflächenprofil 3 somit eine größere Höhe auf als das Pixel 22. Weiter weist in den Figuren 6 bis 9 jeweils das Pixel 23 eine deutlich größere kumulierte Fläche der Felder 25 als das Pixel 22 auf. Dem Pixel 23 ist somit eine höhere (dunklere) Graustufe zuzuweisen als dem Pixel 22. Das Pixel 23 weist somit im Oberflächenprofil 3 eine geringere Höhe auf als das Pixel 22. Dem Pixel 20 mit der geringsten kumulierten Fläche der Felder 25 ist die Graustufe weiß zugeordnet, dem Pixel 20 mit der größten kumulierten Fläche der Felder 25 ist die Graustufe schwarz zugeordnet.

Das in Figur 7 als Graustufenbild dargestellte Oberflächenprofil 3 weist eine Struktur auf, deren Elemente 8 in einem rechtwinkligen Gitter angeordnet sind.

Das in Figur 8 als Graustufenbild dargestellte Oberflächenprofil 3 weist eine Struktur mit versetzt angeordneten Elementen 8 auf.

Das in Figur 9 als Graustufenbild dargestellte Oberflächenprofil 3 weist eine Textur auf, wobei die Höhe der Pixel 20 statistisch verteilt ist.

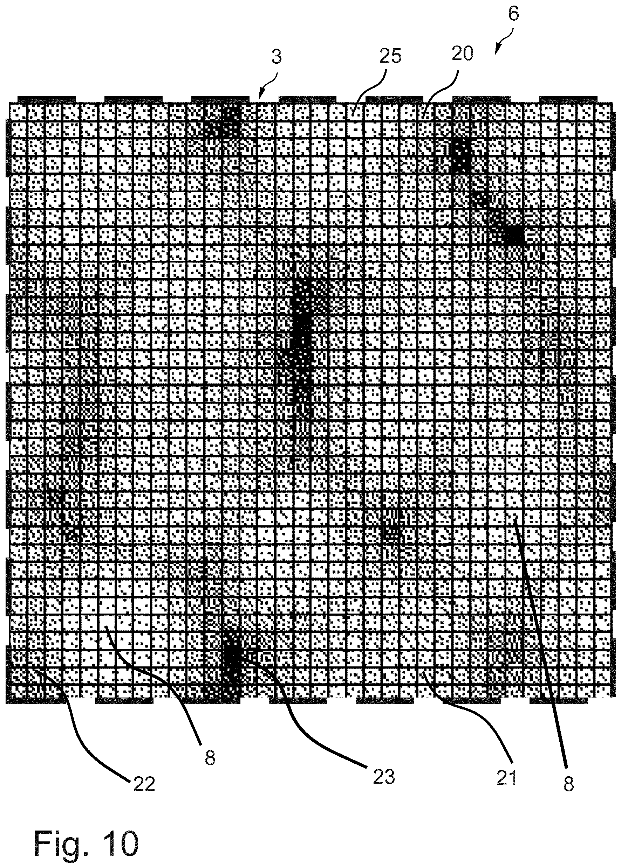

Das in Figur 10 als Graustufenbild dargestellte Oberflächenprofil 3 weist eine Textur auf, wobei Form und Verteilung der Elemente 8 unregelmäßig ist.

### Bezugszeichen

### (Teil der Beschreibung)

- 1: Produktoberfläche
- 2: einfallendes Licht
- 3: Oberflächenprofil
- 41: absorbiertes Licht
- 4: reflektiertes Licht
- 5: erster Code
- 51: zweiter Code
- 6: Zelle einer (ersten) Zellenart
- 7: Zelle einer (zweiten) Zellenart
- 8: Element
- 9: Elementgrund
- 10: Elementspitze
- 11: Kantenlänge eines Codes
- 12: Kantenlänge einer Zelle
- 13: Abstand
- 14: Höhendifferenz
- 15: Ausschnitt
- 16: Detektor
- 18: spezifische Anordnung
- 20: Pixel
- 21, 22, 23: Pixel
- 25: Feld

## Patentansprüche

1. Produktoberfläche (1) aufweisend einen ersten optoelektronisch lesbaren Code (5), welcher durch eine Anordnung flächiger Zellen (6) einer ersten Zellenart und flächiger Zellen (7) einer zweiten Zellenart gebildet ist,
- wobei die Zellen (6,7) integraler Bestandteil der Produktoberfläche (1) sind,
- wobei die Zellen (6,7) einer jeden Zellenart jeweils ein Oberflächenprofil (3) aufweisen,
- wobei das Oberflächenprofil (3) mindestens einer Zellenart mindestens eine Erhebung und/oder Vertiefung relativ zur Produktoberfläche (1) aufweist, und wobei das Oberflächenprofil (3) der ersten Zellenart relativ zum Oberflächenprofil (3) der zweiten Zellenart so ausgebildet ist, dass sich die Reflexionseigenschaften des Oberflächenprofils (3) der ersten Zellenart von den Reflexionseigenschaften des Oberflächenprofils (3) der zweiten Zellenart unterscheiden,
**dadurch gekennzeichnet, dass**
- die Produktoberfläche (1) einen zweiten solcherart ausgebildeten Code (51) aufweist,
- Zellenarten A, welche die erste Zellenart des ersten Codes (5) und die zweite Zellenart des zweiten Codes (51) umfassen, das gleiche Oberflächenprofil (3) aufweisen und
- Zellenarten B, welche die zweite Zellenart des ersten Codes (5) und die erste Zellenart des zweiten Codes (51) umfassen, das gleiche Oberflächenprofil (3) aufweisen,
- beide Codes (5,51) quick-response- (QR-) Codes mit gleicher Codierung und Fehlertoleranz sind,
- die zwei Codes (5,51) auf der Produktoberfläche (1) benachbart angeordnet sind und
- der erste Code (5) und der zweite Code (51) jeweils eine spezifische Anordnung (18) von Zellen (6) der ersten Zellenart und von Zellen (7) der zweiten Zellenart aufweisen, wobei die spezifische Anordnung (18) ein Quadrat aus Zellen (6) der ersten Zellenart, welche von Zellen (7) der zweiten Zellenart umrandet sind, welche wieder von Zellen (6) der ersten Zellenart umrandet sind, umfasst.

2. Produktoberfläche (1) aufweisend einen ersten optoelektronisch lesbaren Code (5), welcher durch eine Anordnung flächiger Zellen (6) einer ersten Zellenart und flächiger Zellen (7) einer zweiten Zellenart gebildet ist,
- wobei die Zellen (6,7) integraler Bestandteil der Produktoberfläche (1) sind,
- wobei die Zellen (6,7) einer jeden Zellenart jeweils ein Oberflächenprofil (3) aufweisen,
- wobei das Oberflächenprofil (3) mindestens einer Zellenart mindestens eine Erhebung und/oder Vertiefung relativ zur Produktoberfläche (1) aufweist, und wobei das Oberflächenprofil (3) der ersten Zellenart relativ zum Oberflächenprofil (3) der zweiten Zellenart so ausgebildet ist, dass sich die Reflexionseigenschaften des Oberflächenprofils (3) der ersten Zellenart von den Reflexionseigenschaften des Oberflächenprofils (3) der zweiten Zellenart unterscheiden,
**dadurch gekennzeichnet, dass**
- die Produktoberfläche (1) einen zweiten solcherart ausgebildeten Code (51) aufweist,
- Zellenarten A, welche die erste Zellenart des ersten Codes (5) und die zweite Zellenart des zweiten Codes (51) umfassen, das gleiche Oberflächenprofil (3) aufweisen und
- Zellenarten B, welche die zweite Zellenart des ersten Codes (5) und die erste Zellenart des zweiten Codes (51) umfassen, das gleiche Oberflächenprofil (3) aufweisen,
- beide Codes (5,51) quick-response- (QR-) Codes sind,
- der erste Code (5) und der zweite Code (51) jeweils eine spezifische Anordnung (18) von Zellen (6) der ersten Zellenart und von Zellen (7) der zweiten Zellenart aufweisen, wobei die spezifische Anordnung (18) ein Quadrat aus Zellen (6) der ersten Zellenart, welche von Zellen (7) der zweiten Zellenart umrandet sind, welche wieder von Zellen (6) der ersten Zellenart umrandet sind, umfasst und
- der zweite Code (51) auf der Produktoberfläche (1) eine geringere Fläche einnimmt als der erste Code (5) und dass der zweite Code (51) in die Fläche des ersten Codes (5) integriert ist, wobei der erste Code (5) ein Design-QR-Code ist, der eine größere Fehlertoleranz aufweist als der zweite Code (51), welcher ein QR Code ist und zumindest zum Teil gleiche Information wie der erste Code (5) darstellt.

3. Produktoberfläche (1) nach wenigstens einem der vorangegangenen Ansprüche, **dadurch gekennzeichnet, dass** das Oberflächenprofil (3) der Zellenarten A relativ zum Oberflächenprofil (3) der Zellenarten B um 90° in der Ebene der Produktoberfläche (1) gedreht ist.

4. Produktoberfläche (1) nach wenigstens einem der vorangegangenen Ansprüche, **dadurch gekennzeichnet, dass** das Oberflächenprofil (3) einer Zellenart Elemente (8) aufweist, die eine Struktur und/oder eine Textur bilden.

5. Produktoberfläche (1) nach wenigstens einem der vorangegangenen Ansprüche, **dadurch gekennzeichnet, dass** sich die Oberflächenprofile (3) der Zellenarten eines Codes (5,51) in ihrer Rautiefe unterscheiden, insbesondere dass das Verhältnis der Rautiefe des Oberflächenprofils (3) einer ersten Zellenart des Codes (5,51) zur Rautiefe des Oberflächenprofils (3) einer zweiten Zellenart des Codes (5,51) mindestens 15, insbesondere mindestens 30, beträgt.

6. Produktoberfläche (1) nach wenigstens einem der vorangegangenen Ansprüche, **dadurch gekennzeichnet, dass** die Produktoberfläche (1) aus einem polymeren Material, insbesondere aus einem elastomeren Material gebildet ist.

7. Verwendung einer Produktoberfläche (1) nach wenigstens einem der Ansprüche 1 bis 6 auf der Seitenwand eines Fahrzeugluftreifens.

8. Verwendung einer Produktoberfläche (1) nach wenigstens einem der Ansprüche 1 bis 6 auf einem Förderband.

## Claims

1. Product surface (1), comprising a first optoelectronically readable code (5) formed by an arrangement of planar cells (6) of a first cell type and planar cells (7) of a second cell type,
- wherein the cells (6, 7) are an integral constituent part of the product surface (1),
- wherein the cells (6, 7) of each cell type respectively have a surface profile (3),
- wherein the surface profile (3) of at least one cell type comprises at least one elevation and/or depression relative to the product surface (1), and wherein the surface profile (3) of the first cell type is formed relative to the surface profile (3) of the second cell type in such a way that the reflection properties of the surface profile (3) of the first cell type differ from the reflection properties of the surface profile (3) of the second cell type,
**characterized in that**
- the product surface (1) comprises a second code (51) embodied in such a way,
- cell types A, which comprise the first cell type of the first code (5) and the second cell type of the second code (51), have the same surface profile (3) and
- cell types B, which comprise the second cell type of the first code (5) and the first cell type of the second code (51), have the same surface profile (3),
- both codes (5, 51) are quick response (QR) codes with the same coding and error tolerance,
- the two codes (5, 51) are arranged adjacently on the product surface (1) and
- the first code (5) and the second code (51) each have a specific arrangement (18) of cells (6) of the first cell type and of cells (7) of the second cell type, wherein the specific arrangement (18) comprises a square of cells (6) of the first cell type, bordered by cells (7) of the second cell type, which in turn are bordered by cells (6) of the first cell type.

2. Product surface (1), comprising a first optoelectronically readable code (5) formed by an arrangement of planar cells (6) of a first cell type and planar cells (7) of a second cell type,
- wherein the cells (6, 7) are an integral constituent part of the product surface (1),
- wherein the cells (6, 7) of each cell type respectively have a surface profile (3),
- wherein the surface profile (3) of at least one cell type comprises at least one elevation and/or depression relative to the product surface (1), and wherein the surface profile (3) of the first cell type is formed relative to the surface profile (3) of the second cell type in such a way that the reflection properties of the surface profile (3) of the first cell type differ from the reflection properties of the surface profile (3) of the second cell type,
**characterized in that**
- the product surface (1) comprises a second code (51) embodied in such a way,
- cell types A, which comprise the first cell type of the first code (5) and the second cell type of the second code (51), have the same surface profile (3) and
- cell types B, which comprise the second cell type of the first code (5) and the first cell type of the second code (51), have the same surface profile (3),
- both codes (5, 51) are quick response (QR) codes,
- the first code (5) and the second code (51) each have a specific arrangement (18) of cells (6) of the first cell type and of cells (7) of the second cell type, wherein the specific arrangement (18) comprises a square of cells (6) of the first cell type, bordered by cells (7) of the second cell type, which in turn are bordered by cells (6) of the first cell type, and
- the second code (51) covers a smaller area on the product surface (1) than the first code (5) and **in that** the second code (51) is integrated into the area of the first code (5), wherein the first code (5) is a design QR code that has a greater error tolerance than the second code (51), which is a QR code and which at least in part represents the same information as the first code (5).

3. Product surface (1) according to at least one of the preceding claims, **characterized in that** the surface profile (3) of the cell types A is rotated through 90° in the plane of the product surface (1) relative to the surface profile (3) of the cell types B.

4. Product surface (1) according to at least one of the preceding claims, **characterized in that** the surface profile (3) of one cell type comprises elements (8) that form a structure and/or a texture.

5. Product surface (1) according to at least one of the preceding claims, **characterized in that** the surface profiles (3) of the cell types of a code (5, 51) differ in terms of their surface roughness, in particular **in that** the ratio of the surface roughness of the surface profile (3) of a first cell type of the code (5, 51) to the surface roughness of the surface profile (3) of a second cell type of the code (5, 51) is at least 15, more particularly at least 30.

6. Product surface (1) according to at least one of the preceding claims, **characterized in that** the product surface (1) is formed from a polymer material, in particular from an elastomer material.

7. Use of a product surface (1) according to at least one of Claims 1 to 6 on the side wall of a vehicle pneumatic tyre.

8. Use of a product surface (1) according to at least one of Claims 1 to 6 on a conveyor belt.

## Revendications

1. Surface de produit (1) possédant un premier code (5) lisible de manière optoélectronique, lequel est formé par un arrangement de cellules planes (6) d'un premier type de cellule et de cellules planes (7) d'un deuxième type de cellule,
- les cellules (6, 7) faisant partie intégrante de la surface de produit (1),
- les cellules (6, 7) de chaque type de cellule possédant respectivement un profil de surface (3),
- le profil de surface (3) d'au moins un type de cellule possédant au moins une élévation et/ou une empreinte par rapport à la surface de produit (1), et le profil de surface (3) du premier type de cellule étant configuré par rapport au profil de surface (3) du deuxième type de cellule de telle sorte que les propriétés de réflexion du profil de surface (3) du premier type de cellule sont différentes des propriétés de réflexion du profil de surface (3) du deuxième type de cellule
**caractérisée en ce que**
- la surface de produit (1) possède un deuxième code (51) configuré de telle sorte,
- des types de cellule A, qui comprennent le premier type de cellule du premier code (5) et le deuxième type de cellule du deuxième code (51), possèdent le même profil de surface (3) et
- des types de cellule B, qui comprennent le deuxième type de cellule du premier code (5) et le premier type de cellule du deuxième code (51), possèdent le même profil de surface (3),
- les deux codes (5, 51) sont des codes à barres 2D (QR) ayant le même codage et la même tolérance aux erreurs,
- les deux codes (5, 51) sont disposés de manière adjacente sur la surface de produit (1) et
- le premier code (5) et le deuxième code (51) possèdent respectivement un arrangement (18) spécifique de cellules (6) du premier type de cellule et de cellules (7) du deuxième type de cellule, l'arrangement (18) spécifique comprenant un carré composé de cellules (6) du premier type de cellule, lesquelles sont entourées par des cellules (7) du deuxième type de cellule, lesquelles sont à leur tour entourées par des cellules (6) du premier type de cellule.

2. Surface de produit (1) possédant un premier code (5) lisible de manière optoélectronique, lequel est formé par un arrangement de cellules planes (6) d'un premier type de cellule et de cellules planes (7) d'un deuxième type de cellule,
- les cellules (6, 7) faisant partie intégrante de la surface de produit (1),
- les cellules (6, 7) de chaque type de cellule possédant respectivement un profil de surface (3),
- le profil de surface (3) d'au moins un type de cellule possédant au moins une élévation et/ou une empreinte par rapport à la surface de produit (1), et le profil de surface (3) du premier type de cellule étant configuré par rapport au profil de surface (3) du deuxième type de cellule de telle sorte que les propriétés de réflexion du profil de surface (3) du premier type de cellule sont différentes des propriétés de réflexion du profil de surface (3) du deuxième type de cellule
**caractérisée en ce que**
- la surface de produit (1) possède un deuxième code (51) configuré de telle sorte,
- des types de cellule A, qui comprennent le premier type de cellule du premier code (5) et le deuxième type de cellule du deuxième code (51), possèdent le même profil de surface (3) et
- des types de cellule B, qui comprennent le deuxième type de cellule du premier code (5) et le premier type de cellule du deuxième code (51), possèdent le même profil de surface (3),
- les deux codes (5, 51) sont des codes à barres 2D (QR),
- le premier code (5) et le deuxième code (51) possèdent respectivement un arrangement (18) spécifique de cellules (6) du premier type de cellule et de cellules (7) du deuxième type de cellule, l'arrangement (18) spécifique comprenant un carré composé de cellules (6) du premier type de cellule, lesquelles sont entourées par des cellules (7) du deuxième type de cellule, lesquelles sont à leur tour entourées par des cellules (6) du premier type de cellule et
- le deuxième code (51) occupe sur la surface de produit (1) une surface plus petite que le premier code (5) et **en ce que** le deuxième code (51) est intégré dans la surface du premier code (5), le premier code (5) étant un code QR de design qui possède une tolérance aux erreurs supérieure à celle du deuxième code (51), lequel est un code QR et représente au moins en partie les mêmes informations que le premier code (5).

3. Surface de produit (1) selon au moins l'une des revendications précédentes, **caractérisée en ce que** le profil de surface (3) des types de cellule A est tourné de 90° dans le plan de la surface de produit (1) par rapport au profil de surface (3) des types de cellule B.

4. Surface de produit (1) selon au moins l'une des revendications précédentes, **caractérisée en ce que** le profil de surface (3) d'un type de cellule possède des éléments (8) qui forment une structure et/ou une texture.

5. Surface de produit (1) selon au moins l'une des revendications précédentes, **caractérisée en ce que** les profils de surface (3) des types de cellule d'un code (5, 51) se différencient par leur rugosité de surface, notamment **en ce que** le rapport entre la rugosité de surface du profil de surface (3) d'un premier type de cellule du code (5, 51) et la rugosité de surface du profil de surface (3) d'un deuxième type de cellule du code (5, 51) est au moins égal à 15, de préférence au moins égal à 30.

6. Surface de produit (1) selon au moins l'une des revendications précédentes, **caractérisée en ce que** la surface de produit (1) se compose d'un matériau polymère, notamment d'un matériau élastomère.

7. Utilisation d'une surface de produit (1) selon au moins l'une des revendications 1 à 6 sur la paroi latérale d'un bandage pneumatique de véhicule.

8. Utilisation d'une surface de produit (1) selon au moins l'une des revendications 1 à 6 sur une bande transporteuse.
